# EUROPÄISCHE PATENTSCHRIFT

(11) **EP 1 957 811 B1**
(45) Veröffentlichungstag und Bekanntmachung des Hinweises auf die Patenterteilung: **08.08.2012**
(21) Anmeldenummer: 06828605.3
(22) Anmeldetag: 05.12.2006
(51) Int. Cl.: F16C 33/36, F16C 33/52

(54) **RADIALWÄLZLAGER, INSBESONDERE EINREIHIGES RILLENWÄLZLAGER**
RADIAL ANTIFRICTION BEARING, ESPECIALLY SINGLE-ROW GROOVED ANTIFRICTION BEARING
ROULEMENT RADIAL, EN PARTICULIER ROULEMENT RAINURE A UNE RANGEE

(30) Priorität: 10.12.2005 DE 102005059033
(43) Veröffentlichungstag der Anmeldung: 20.08.2008
(73) Patentinhaber: Schaeffler Technologies AG & Co. KG, 91074 Herzogenaurach (DE)
(72) Erfinder: HOFMANN, Heinrich, 97422 Schweinfurt (DE); DÖPPLING, Horst, 91074 Herzogenaurach (DE); BOHR, Andreas, 91074 Herzogenaurach (DE); EIDLOTH, Rainer, 91074 Herzogenaurach (DE)
(86) Internationale Anmeldenummer: PCT/DE2006/002153
(87) Internationale Veröffentlichungsnummer: WO 2007/065414

(56) Entgegenhaltungen:
- DE-A1- 4 334 195
- US-A1- 1 438 654
- US-A1- 3 620 585

## Beschreibung

### Gebiet der Erfindung

Die Erfindung betrifft ein Radialwälzlager nach den oberbegriffsbildenden Merkmalen des Patentanspruchs 1, und sie ist insbesondere vorteilhaft an einreihigen Rillenwälzlagern in Kraftfahrzeug-Getrieben, innerhalb des Sekundärtriebs von Verbrennungsmotoren oder in elektrischen Bremsen realisierbar.

### Hintergrund der Erfindung

Dem Fachmann in der Wälzlagertechnik ist es allgemein bekannt, dass einreihige Rillenkugellager starre, nicht zerlegbare Radialwälzlager sind, die sich vor allem dadurch auszeichnen, dass deren radiale und axiale Tragfähigkeit gleichermaßen hoch ist und dass diese wegen ihrer geringen Reibung die höchsten Drehzahlgrenzen aller Lagerarten aufweisen. Diese Rillenkugellager sind seit langem bekannt und bestehen im Wesentlichen aus einem äußeren Lagerring und einem inneren Lagerring sowie aus einer Anzahl zwischen den Lagerringen angeordneter Kugeln als Wälzkörpern, die in jeweils rillenförmigen Kugellaufbahnen in der Innenseite des äußeren Lagerrings und in der Außenseite des inneren Lagerrings durch einen Lagerkäfig in gleichmäßigen Abständen zueinander geführt werden. Das Befüllen von Radialkugellagern mit den Kugeln erfolgt dabei durch das mit der DE 168 499 bekannt gewordene Exzentermontageverfahren, bei dem die beiden Lagerringe exzentrisch zueinander angeordnet werden und der dadurch entstehende freie Raum zwischen den Lagerringen mit den Kugeln befüllt wird, die abschließend auf dem Teilkreis der beiden Kugellaufbahnen mit gleichmäßigem Abstand zueinander verteilt werden.

In der Praxis hat es sich jedoch gezeigt, dass derartigen Rillenkugellagern aufgrund der geringen maximal einbaubaren Anzahl von Kugeln, die von den Abmessungen des inneren und des äußeren Lagerrings sowie dem Kugeldurchmesser abhängig ist, in Bezug auf die Tragfähigkeit des Lagers dennoch Grenzen gesetzt sind. In der Vergangenheit wurden daher eine Vielzahl von Lösungen vorgeschlagen, mit denen durch eine Erhöhung der Anzahl der Kugeln eine Erhöhung der Tragfähigkeit von Rillenkugellagern erreicht werden sollte.

Eine solche Möglichkeit, die Anzahl der Wälzkörper an einem Radialwälzlager zu erhöhen, ist beispielsweise durch die DE 43 34 195 A1 bekannt geworden. Bei diesem, an sich als einreihiges Rillenkugellager ausgebildeten Radialwälzlager werden die Wälzkörper jedoch nicht durch Kugeln sondern durch so genannte Kugelscheiben gebildet, die mit zwei symmetrisch von einer Kugelgrundform abgeflachten sowie parallel zueinander angeordneten Seitenflächen ausgebildet sind. Die Breite dieser Kugelscheiben zwischen deren Seitenflächen ist dabei kleiner als der Abstand zwischen der Innenseite des äußeren Lagerrings und Außenseite des inneren Lagerrings ausgebildet, so dass beim Befüllen des Lagers die Kugelscheiben axial zum Lager durch den Abstand zwischen Innenring und Außenring in das Lager eingeführt und dann um 90° in die Laufbahnen der Lagerringe gedreht werden können. Da durch dieses Montageverfahren kleinere Abstände zwischen den einzelnen Wälzkörpern erzielbar sind, kann somit insgesamt eine höhere Anzahl an Wälzkörpern in das Radialwälzlager eingebracht werden. Um jedoch ein gegenseitiges Berühren sowie ein selbsttätiges Verdrehen der Wälzkörper quer zur Laufrichtung im Lagerbetrieb zu vermeiden, werden auch diese Wälzkörper in einem Lagerkäfig in gleichmäßigen Abständen zueinander gehalten sowie axial geführt.

Eine der in der DE 43 34 195 A1 vorgeschlagenen Käfigausführungen für ein Kugelscheibenlager ist dabei ein aus zwei Ringhälften zusammengefügter Lagerkäfig, bei dem in jede der Ringhälften jeweils der Anzahl der Kugelscheiben entsprechende Vertiefungen eingearbeitet sind, die in komplementäre zentrische Vertiefungen in den Seitenflächen der Kugelscheiben eingreifen. Die Vertiefungen in den Seitenflächen der Kugelscheiben sind dabei durch eine zentrische Durchgangsbohrung miteinander verbunden, durch welche hindurch die beiden Ringhälften durch Niete miteinander verbunden werden, so dass die Kugelscheiben in Umfangsrichtung fest zueinander fixiert sind. Zwischen den Vertiefungen weisen beide Ringhälften des Lagerkäfigs jeweils gerade entlang der Seitenflächen der Kugelscheiben verlaufende Abschnitte auf, durch die im Zusammenwirken mit den als Rollachsen der Kugelscheiben dienenden Nieten auch ein selbsttätiges Verdrehen der Wälzkörper quer zu deren Laufrichtung vermieden wird.

Als nachteilig hat es sich jedoch bei einem derart ausgebildeten Lagerkäfig erwiesen, dass mit diesem nicht das gesamte, bei unterschiedliche Lagerbelastungen auftretende kinematische Verhalten der als Kugelscheiben ausgebildeten Wälzkörper berücksichtigt worden ist. So wurde beispielsweise festgestellt, dass Kugelscheiben als Wälzkörper in Radialwälzlagern bei höheren Drehzahlen und gleichmäßiger Last aufgrund des eintretenden Kreiselffektes ohne Schränkbewegungen stabil in ihren Wälzkörperlaufbahnen laufen und keine axiale Führung durch den Lagerkäfig benötigen. Fällt jedoch die Lagerdrehzahl unter eine zulässige Mindestdrehzahl, tritt ein so genannter Taumeleffekt ein, bei dem die Kugelscheiben dazu neigen, in ihren Laufbahnen quer zur Laufrichtung wellenförmig abzurollen. Dabei kommt es zum Kontakt der Laufbahnkanten der Kugelscheiben mit den geraden Abschnitten der beiden Ringhälften des Lagerkäfigs, durch den Reibungswärme erzeugt wird und der für einen Anstieg der Betriebstemperatur im Radialwälzlager ursächlich ist. Die Reibung zwischen den Kugelscheiben und dem Lagerkäfig kann dabei so stark werden, dass durch die entstehende Reibungswärme die zulässige Betriebstemperatur des Lagers überschritten wird und der erforderliche Schmierfilm zwischen den Kugelscheiben, dem Lagerkäfig und den Lagerringen örtlich abreißt oder der Schmierstoff teilweise verbrennt, so dass es zur Zerstörung des Lagerkäfigs sowie zum vorzeitigen Ausfall des Lagers kommt. Ebenso konnte festgestellt werden, dass bei einem solchen Lagerkäfig ein ähnlicher ebenfalls zur Zerstörung des Lagerkäfigs und zum Ausfall des Lagers führender Effekt dadurch eintritt, dass die Kugelscheiben durch ihre zwischen den beiden Ringhälften eingespannte Lagerung auf den Nieten des Lagerkäfigs keine Möglichkeit haben, sich bei gemischter radialer und axialer Belastung des Radialwälzlagers nicht auf den jeweiligen Druckwinkel des Radialwälzlagers ausrichten zu können. Bei dem Bestreben der Kugelscheiben, sich unter solchen Belastungen des Radialwälzlagers selbsttätig auf den Druckwinkel des Radialwälzlagers auszurichten kommt es ebenfalls zum Kontakt der Seitenflächen der Kugelscheiben mit den geraden Abschnitten der Ringhälften des Lagerkäfigs sowie zum Kontakt der zentrischen Durchgangsbohrung in den Kugelscheiben mit den Nieten des Lagerkäfigs, so dass es auch unter solchen Bedingungen zum Entstehen von übermäßiger Reibungswärme im Radialwälzlager kam.

Ein anderer, das beschriebene kinematische Verhalten der Kugelscheiben bei unterschiedtiche Lagerbelastungen zumindest teilweise berücksichtigender Lagerkäfig ist darüber hinaus durch die US 1,438,645 A1 bekannt geworden, die ein Radialwälzlager nach dem Oberbegriff des Anspruchs 1 offenbart. Die ein Radialwälzlager nach dem Oberbegriff des Anspruchs 1 offenbart. Der in dieser Druckschrift offenbarte Lagerkäfig besteht ebenfalls aus zwei Ringhälften, die für jeden Wälzkörper einzelne, dieselben linienförmig umschließende Käfigtaschen bilden, jedoch über Nietverbindungen zwischen den einzelnen Käfigtaschen zusammengefügt sind. An den Innenseiten der Längsstege der Käfigtaschen sind dabei kegelförmige Erhebungen angeformt, die mit den Zentrumsbereichen der Seitenflächen der Wälzkörper derart in Wirkverbindung stehen, dass diese in den Käfigtaschen über zwei reibungsarme Punktkontakte zum Lagerkäfig zwischen den Lagerringen axial geführt werden. Gleichzeitig weisen die Wälzkörper dadurch jeweils einen definierten Freiheitsgrad für quer zur Laufrichtung auftretende Kippbewegungen und zum selbsttätigen Ausrichten an den Druckwinkel des Radialwälzlagers auf.

Nachteilig bei diesem Lagerkäfig ist jedoch, dass den Wälzkörpern im Zusammenhang mit der relativ großen Höhe der Längsstege der Käfigtaschen immer noch kein ausreichender Bewegungsspielraum zur Verfügung steht, um sich ohne Kontakt zum Lagerkäfig an die jeweils vorliegende Lagerbelastung anpassen können. Bei dem Bestreben der Kugelscheiben, sich unter gemischt radialer und axialer Belastungen des Radialwälzlagers selbsttätig auf den Druckwinkel des Radialwälzlagers auszurichten kommt es deshalb ebenfalls zum Kontakt der Seitenflächen der Kugelscheiben mit den geraden Abschnitten der Ringhälften des Lagerkäfigs, so dass es auch hier zum Entstehen von übermä-βiger Reibungswärme im Radialwälzlager kommt.

### Aufgabe der Erfindung

Ausgehend von den dargelegten Nachteilen des bekannten Standes der Technik liegt der Erfindung deshalb die Aufgabe zu Grunde, ein Radialwälzlager, insbesondere Rillenwälzlager, zu konzipieren, das mit einem einfach und kostengünstig herstellbaren Lagerkäfig ausgebildet ist, mit dem einerseits eine axiale Führung der als Kugelscheiben ausgebildeten Wälzkörper gewährleistet ist und mit dem andererseits auch bei niedrigen Lagerdrehzahlen und/oder bei gemischter axialer und radialer Lagerbelastung ein Reibungswärme erzeugenden Kontakt zwischen den Kugelscheiben und dem Lagerkäfig vermeidbar ist.

### Beschreibung der Erfindung

Erfindungsgemäß wird diese Aufgabe bei einem Radialwälzlager nach dem Oberbegriff des Anspruchs 1 derart gelöst, dass der Teilkreis des Lagerkäfigs kleiner als der Teilkreis des Radialwälzlagers ist, wobei die Längsstege der Käfigtaschen eine maximale Höhe von 35 % des Durchmessers der Wälzkörper aufweisen und die durch die Seitenflächen der Wälzkörper begrenzte Wälzkörperbreite mindestens 70% des Durchmessers der Wälzkörper beträgt.

Bevorzugte Ausgestaltungen und Weiterbildungen des erfindungsgemäß ausgebildeten Radialwälzlagers werden in den Unteransprüchen beschrieben.

Danach ist es gemäß den Ansprüchen 2 bis 4 bei dem erfindungsgemäß ausgebildeten Radialwälzlager vorgesehen, dass die entsprechend den Längs- und Querradien der Laufflächen der Wälzkörper gewölbt ausgebildeten Querstege der Käfigtaschen sich beidseitig derart über diese Laufflächen hinaus erstrecken, dass die zwischen den Querstegen über verrundete Übergangsbereiche mit diesen verbundenen Längsstege der Käfigtaschen in einem Abstand zu den Seitenflächen der Wälzkörper angeordnet sind. Die sich über die Laufflächen der Wälzkörper hinaus erstreckende Ausbildung der Querstege der Käfigtaschen bewirkt dabei, dass die Wälzkörper in Laufrichtung beidseitig einen durch die Übergangsbereiche zu den Längsstegen der Käfigtaschen begrenzten Freiheitsgrad eines Winkels von etwa 3° bis 7° aufweisen, durch den bei quer zur Laufrichtung auftretenden Kippbewegungen der Wälzkörper unterhalb einer zulässigen Mindestdrehzahl ein Reibungswärme erzeugender Kontakt zwischen den Kugelscheiben und dem Lagerkäfig vermieden wird. Die von den Seitenflächen beabstandete Anordnung der Längsstege der Käfigtaschen hat dagegen den Vorteil, dass die Wälzkörper gleichzeitig einen durch die Ober- und Unterkanten der Längsstege begrenzten beidseitigen axialen Freiheitsgrad eines Winkels von etwa 12° bis 18° aufweisen, durch den die Wälzkörper bei radialer und axialer Lagerbelastung sich selbsttätig an den Druckwinkel des Radiallagers ausrichten können.

Nach Anspruch 5 ist es ein weiteres Merkmal des erfindungsgemäß ausgebildeten Wälzlagers, dass der Zentrumsbereich der Seitenflächen der Wälzkörper entweder durch in diese Seitenflächen eingearbeitete zentrische Vertiefungen oder durch in diese Seitenflächen eingearbeitete konzentrische Ausnehmungen gebildet wird. Bei Ausbildung der Wälzkörper mit zentrischen Vertiefungen sind diese bevorzugt in Form kreisrunder flacher Mulden ausgebildet, während bei Ausbildung der Wälzkörper mit die konzentrischen Ausnehmungen diese bevorzugt durch flache Ringnuten gebildet werden, die um die Wälzkörperachse herum verlaufen. Diese Vertiefungen oder Ausnehmungen haben dabei vor allem den Vorteil, dass dadurch der Massenschwerpunkt der Wälzkörper radial nach außen zu deren Laufflächen hin verlagert wird und sich somit die Laufeigenschaften der Wälzkörper wesentlich verbessern.

Sind die Wälzkörper mit als Kreismulden ausgebildeten zentrischen Vertiefungen in ihren Seitenflächen ausgebildet, ist es nach Anspruch 6 ein weiteres Merkmal des erfindungsgemäß ausgebildeten Radialwälzlagers, dass die zur axialen Führung der Wälzkörper vorgesehenen Punktkontakte zwischen den Zentrumsbereichen der Seitenflächen und den Längsstegen der Käfigtaschen über zwei längsmittig in die Längsstege eingeformte Kegelspitzen herstellbar sind. Diese in die zentrischen Vertiefungen in den Seitenflächen der Wälzkörper axial hineinragenden Kegelspitzen stehen im Führungsfall mit dem ebenen Grund der Vertiefungen in Wirkverbindung, weisen jedoch im Lagerbetrieb keinen dauerhaften Kontakt zum Grund der Vertiefungen auf. Darüber hinaus hat es sich als vorteilhaft erwiesen, die Kegelspitzen an ihren Enden verrundet auszubilden, um einem vorzeitigen Verschleiß dieser Kegelspitzen vorzubeugen.

Zur Lösung der Aufgabenstellung tragen schließlich auch noch die Merkmale des erfindungsgemäß ausgebildeten Radiallagers nach den Ansprüchen 7 und 8 bei, nach denen der Lagerkäfig entweder als spanlos herstellbares Stanzzieh-Prägeteil aus einem Metallwerkstoff oder als Spritzgussteil aus einem technischen oder hochtemperaturbeständigen Kunststoff ausgebildet ist oder alternativ aus einem Faserverbundkunststoff aus Gewebeverstärkung und Harzmatrix hergestellt wird. Bei den Metallwerkstoffen haben sich dabei vor allem Stahl, Messing oder Aluminium als geeignet erwiesen, mit denen der Lagerkäfig zusätzlich vollständig oder begrenzt auf dessen Kontaktstellen mit den Wälzkörpern mit Funktionsschichten aus Hartstoff, Chrom-Eisen, Oxid-Keramiken oder Molybdän beschichtet oder mit einem technischen Kunststoff umspritzt werden kann. Als technische Kunststoffe für den Lagerkäfig bieten sich dagegen PA 66 oder PA 46 mit oder ohne Einlagerungen aus Glasfaser an, während als hochtemperaturbeständige Kunststoffe beispielsweise PAEK, PEEK, TPI oder PAI mit geeigneten Additiven oder Einlagerungen aus Glasfaser verwendbar sind. Die genannten Werkstoffe haben sich dabei als besonders kostengünstig in ihrer Anschaffung erwiesen und ermöglichen darüber hinaus den Einsatz kostengünstiger Fertigungsverfahren für den Lagerkäfig, so dass mit derartigen Lagerkäfigen ausgebildete Radiallager insgesamt mit niedrigen Herstellungskosten herstellbar sind.

Das erfindungsgemäß ausgebildete Radialwälzlager weist somit gegenüber den aus dem Stand der Technik bekannten Radialwälzlagern den Vorteil auf, dass durch die kleinere Dimensionierung des Teilkreises des Lagerkäfigs gegenüber dem Teilkreis des Radialwälzlagers ist und durch die Ausbildung der Längsstege der Käfigtaschen mit einer maximalen Höhe von 35 % des Durchmessers der Wälzkörper die Wälzkörper somit unterhalb ihrer Längsachsen durch die Käfigtaschen umschlossen werden, so dass den Wälzkörpern ausreichend Bewegungsspielraum zur Verfügung steht, um sich ohne Kontakt zum Lagerkäfig an die jeweils vorliegende Lagerbelastung anpassen können. Die durch die Seitenflächen der Wälzkörper begrenzte Wälzkörperbreite von mindestens 70% des Durchmessers der Kugelgrundform der Wälzkörper hat sich dabei in der Praxis hinsichtlich der radialen und axialen Tragfähigkeit des Lagers bewährt hat und entspricht in etwa der Kontaktfläche, die auch die Kugeln herkömmlicher Rillenkugellager zu ihren Laufbahnen in den Lagerringen aufweisen.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: eine räumliche Sprengdarstellung eines erfindungsgemäß ausgebildeten Radialwälzlagers;
- Figur 2: eine vergrößerte räumliche Darstellung eines Querschnitts durch ein erfindungsgemäß ausgebildetes Radialwälzlager;
- Figur 3: eine räumliche Einzelteildarstellung des Lagerkäfigs eines erfindungsgemäß ausgebildeten Radialwälzlagers;
- Figur 4: eine Einzelteildarstellung einer Käfigtasche des Lagerkäfigs eines erfindungsgemäß ausgebildeten Radialwälzlagers.

### Ausführliche Beschreibung der Zeichnungen

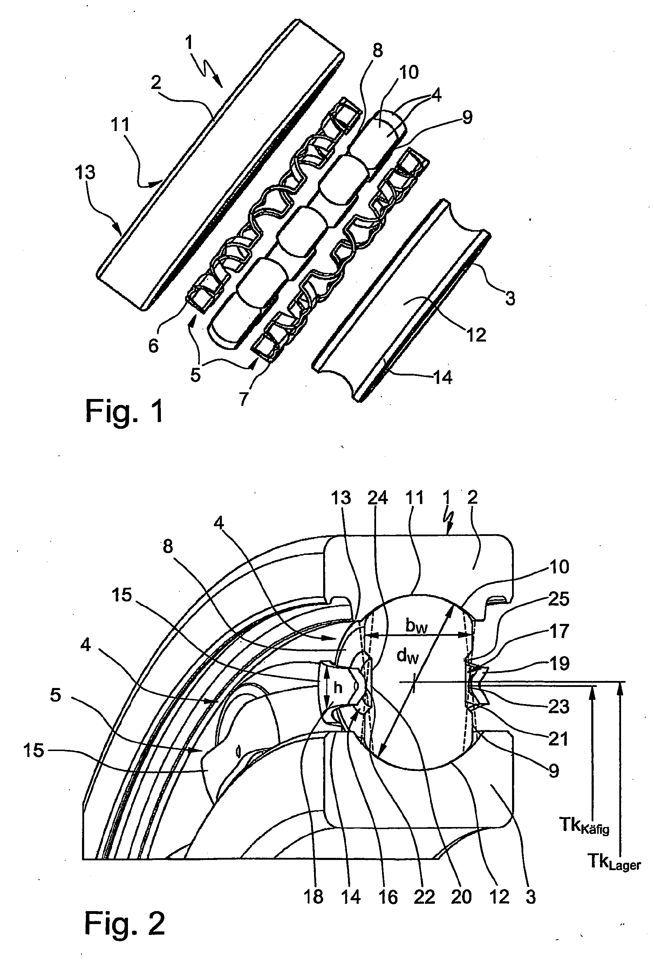

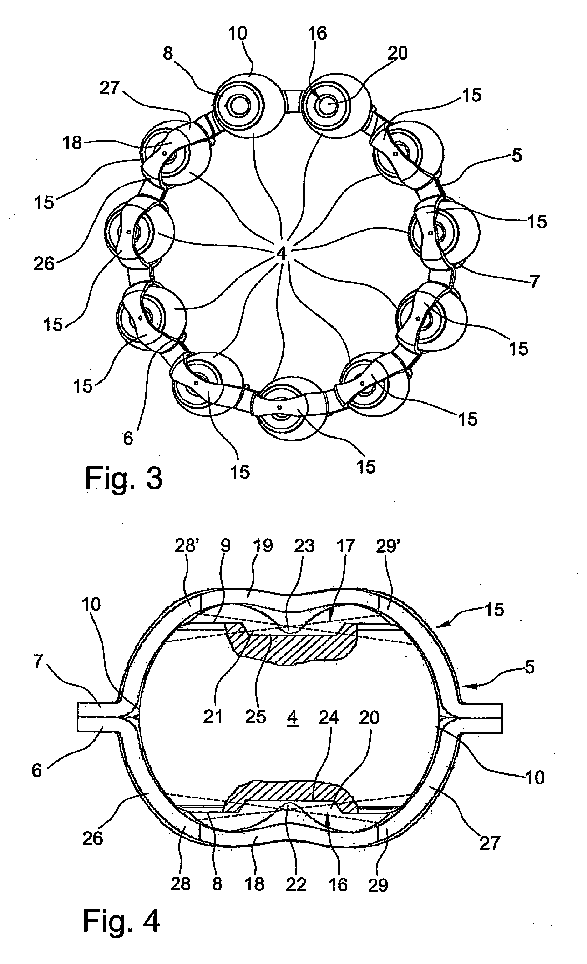

Aus den Figuren 1 und 2 geht deutlich ein als einreihiges Rillenwälzlager ausgebildetes Radialwälzlager 1 hervor, welches ähnlich wie bekannte Rillenkugellager im Wesentlichen aus einem äußeren Lagerring 2 und einem inneren Lagerring 3 sowie aus einer Vielzahl zwischen diesen Lagerringen 2, 3 angeordneter Wälzkörper 4 besteht. Die Wälzkörper 4 werden dabei deutlich sichtbar durch so genannte Kugelscheiben gebildet, die jeweils zwei symmetrisch von einer Kugelgrundform abgeflachte, parallel zueinander angeordnete Seitenflächen 8, 9 aufweisen und mit ihren Laufflächen 10 in zwei rillenförmigen Laufbahnen 11, 12 abrollen, die jeweils in die Innenseite 13 des äußeren Lagerrings 2 und in die Außenseite 14 des inneren Lagerrings 3 eingearbeitet sind. Darüber hinaus werden die Wälzkörper 4 durch einen aus zwei Ringhälften 6, 7 zusammengefügten Lagerkäfig 5 in Umfangsrichtung in gleichmäßigen Abständen zueinander gehalten, der, wie in Figur 3 zu sehen ist, für jeden Wälzkörper 4 einzelne, dieselben vollständig umschließende Käfigtaschen 15 aufweist, in denen die Wälzkörper 4 über zwei reibungsarme Punktkontakte zwischen den Zentrumsbereichen 16, 17 ihrer Seitenflächen 8, 9 und den Längsstegen 18, 19 der Käfigtaschen 15 axial zwischen den Lagerringen 2, 3 geführt werden. Gleichzeitig sind die Wälzkörper 4 durch die Punktkontakte zum Lagerkäfig 5 sowohl mit einem definierten Freiheitsgrad für quer zur Laufrichtung auftretende Kippbewegungen als auch mit einem definierten Freiheitsgrad zum selbsttätigen Ausrichten an den Druckwinkel des Radialwälzlagers 1 ausgebildet.

Desweiteren wird insbesondere durch Figur 2 deutlicht, dass zur Vermeidung eines Kontaktes zwischen den als Kugelscheiben ausgebildeten Wälzkörpern 4 und dem Lagerkäfig 5 der Teilkreis Tk_{Käfig} des Lagerkäfigs 5 kleiner als der Teilkreis Tk_{Lager} des Radialwälzlagers 1 ist, so dass die Wälzkörper 4 unterhalb ihrer Längsachsen durch die Käfigtaschen 15 umschlossen werden. Die Längsstege 18, 19 der Käfigtaschen 15 weisen dabei eine maximale Höhe h von 35% des Durchmessers dw der Wälzkörper 4 auf und die durch die Seitenflächen 8, 9 der Wälzkörper 4 begrenzte Wälzkörperbreite b_{w} beträgt dabei mindestens 70% des Durchmessers d_{w} der Wälzkörper 4.

Aus Figur 4 ist darüber hinaus ersichtlich, dass die entsprechend den Längs- und Querradien der Laufflächen 10 der Wälzkörper 4 gewölbt ausgebildeten Querstege 26, 27 der Käfigtaschen 15 sich deutlich sichtbar beidseitig derart über diese Laufflächen 10 hinaus erstrecken, dass die zwischen den Querstegen 26, 27 über verrundete Übergangsbereiche 28, 29', 29, 29' mit diesen verbundenen Längsstege 18, 19 der Käfigtaschen 15 in einem Abstand zu den Seitenflächen 8, 9 der Wälzkörper 4 angeordnet sind. Die sich über die Laufflächen 10 der Wälzkörper 4 hinaus erstreckende Ausbildung der Querstege 26, 27 der Käfigtaschen 15 bewirkt dabei zum einen, dass die Wälzkörper 4 beidseitig einen durch die Übergangsbereiche 28, 28', 29, 29' zu den Längsstegen 18, 19 der Käfigtaschen 15 begrenzten und in Figur 4 durch gestrichelte Linien angedeuteten Freiheitsgrad von etwa 3° bis 7° für quer zur Laufrichtung auftretende Kippbewegungen aufweisen. Zum anderen wird durch die von den Seitenflächen 8, 9 der Wälzkörper 4 beabstandete Anordnung der Längsstege 18, 19 der Käfigtaschen 15 erreicht, dass die Wälzkörper 4 gleichzeitig beidseitig einen durch die Ober- und Unterkanten der Längsstege 18, 19 begrenzten und in Figur 2 durch gestrichelte Linien angedeuteten Freiheitsgrad von etwa 12° bis 18° zum selbsttätigen Ausrichten an den Druckwinkel des Radiallagers 1 bei radialer und axialer Lagerbelastung aufweisen.

Ebenso ist in Figur 4 erkennbar, dass die Zentrumsbereiche 16, 17 der Seitenflächen 8, 9 der Wälzkörper 4 durch in diese Seitenflächen 8, 9 eingearbeitete zentrische Vertiefungen 20, 21 gebildet werden, die einen Teil der axialen Führung der Wälzkörper bilden und durch die zugleich der Massenschwerpunkt der Wälzkörper 4 radial nach außen zu deren Laufflächen 10 hin verlagert wird. Die Punktkontakte zwischen den Zentrumsbereichen 16, 17 der Seitenflächen 8, 9 und den Längsstegen 18, 19 der Käfigtaschen 15 werden dabei über zwei längsmittig in die Längsstege 18, 19 eingeformte und in jeweils zentrische Vertiefungen 20, 21 in den Seitenflächen 8, 9 der Wälzkörper 4 hineinragende axiale Kegelspitzen 22, 23 hergestellt, die mit dem ebenen Grund 24, 25 der Vertiefungen 20, 21 in Wirkverbindung stehen.

Lediglich andeutungsweise geht aus den Zeichnungen noch hervor, dass der Lagerkäfig 5 als spanlos hergestelltes Stanzzieh-Prägeteil aus einem Stahlblech ausgebildet ist, der begrenzt auf dessen Kontaktstellen mit den Wälzkörpern 4 mit einer verschleißmindernden Funktionsschichten aus Chrom-Eisen beschichtet ist.

### Bezugszahlenliste

- 1: Radialwälzlager
- 2: äußerer Lagerring
- 3: innerer Lagerring
- 4: Wälzkörper
- 5: Lagerkäfig
- 6: Ringhälfte von 5
- 7: Ringhälfte von 5
- 8: Seitenfläche von 4
- 9: Seitenfläche von 4
- 10: Laufflächen von 4
- 11: Laufbahn von 2
- 12: Laufbahn von 3
- 13: Innenseite von 2
- 14: Außenseite von 3
- 15: Käfigtaschen
- 16: Zentrumsbereich von 8
- 17: Zentrumsbereich von 9
- 18: Längssteg von 15
- 19: Längssteg von 15
- 20: Vertiefung in 8
- 21: Vertiefung in 8
- 22: Kegelspitze an 18
- 23: Kegelspitze an 19
- 24: Grund von 20
- 25: Grund von 21
- 26: Quersteg von 15
- 27: Quersteg von 15
- 28: Übergangsbereich
- 28': Übergangsbereich
- 29: Übergangsbereich
- 29': Übergangsbereich
- Tk_{Käfig}: Teilkreis von 5
- Tk_{Lager}: Teilkreis von 1
- h: Höhe von 18, 19
- d_{w}: Durchmesser von 4
- b_{w}: Breite von 4

## Patentansprüche

1. Radialwälzlager, insbesondere einreihiges Rillenwälzlager, welches im Wesentlichen aus einem äußeren Lagerring (2) und einem inneren Lagerring (3) sowie aus einer Vielzahl zwischen diesen Lagerringen (2, 3) angeordneter und als Kugelscheiben ausgebildeter Wälzkörper (4) besteht, die jeweils zwei symmetrisch von einer Kugelgrundform abgeflachte, parallel zueinander angeordnete Seitenflächen (8, 9) aufweisen und mit ihren Laufflächen (10) in zwei rillenförmigen Laufbahnen (11, 12) abrollen, welche in die Innenseite (13) des äußeren Lagerrings (2) und in die Außenseite (14) des inneren Lagerrings (3) eingearbeitet sind, wobei die Wälzkörper (4) in Umfangsrichtung durch einen aus zwei Ringhälften (6, 7) zusammengefügten Lagerkäfig (5) in gleichmäßigen Abständen zueinander gehalten werden, der für jeden Wälzkörper (4) einzelne, dieselben linienförmig umschließende Käfigtaschen (15) aufweist, in denen die Wälzkörper (4) über zwei reibungsarme Punktkontakte zwischen den Zentrumsbereichen (16, 17) ihrer Seitenflächen (8, 9) und den Längsstegen (18, 19) der Käfigtaschen (15) einerseits zwischen den Lagerringen (2, 3) axial geführt werden und andererseits sowohl mit einem definierten Freiheitsgrad für quer zur Laufrichtung auftretende Kippbewegungen als auch mit einem definierten Freiheitsgrad zum selbsttätigen Ausrichten an den Druckwinkel des Radialwälzlagers (1) ausgebildet sind, **dadurch gekennzeichnet, dass** der Teilkreis (Tk_{Käfig}) des Lagerkäfigs (5) kleiner als der Teilkreis (Tk_{Lager}) des Radialwälzlagers (1) ist, wobei die Längsstege (18,19) der Käfigtaschen (15) eine maximale Höhe (h) von 35 % des Durchmessers (d_{w}) der Wälzkörper (4) aufweisen und die durch die Seitenflächen (8, 9) der Wälzkörper (4) begrenzte Wälzkörperbreite (b_{w}) mindestens 70% des Durchmessers (d_{w}) der Wälzkörper (4) beträgt.

2. Radialwälzlager nach Anspruch 1, **dadurch gekennzeichnet, dass** die entsprechend den Radien der Laufflächen (10) der Wälzkörper (4) gewölbt ausgebildeten Querstege (26, 27) der Käfigtaschen (15) sich beidseitig derart über diese Laufflächen (10) hinaus erstrecken, dass die zwischen den Querstegen (26, 27) über verrundete Übergangsbereiche (28, 29', 29, 29') mit diesen verbundenen Längsstege (18, 19) der Käfigtaschen. (15) in einem Abstand zu den Seitenflächen (8, 9) der Wälzkörper (4) angeordnet sind.

3. Radialwälzlager nach Anspruch 2, **dadurch gekennzeichnet, dass** die Wälzkörper (4) durch die sich über deren Laufflächen (10) hinaus erstreckende Ausbildung der Querstege (26, 27) der Käfigtaschen (15) beidseitig einen durch die Übergangsbereiche (28, 28', 29, 29') zu den Längsstegen (18, 19) der Käfigtaschen (15) begrenzten Freiheitsgrad von etwa 3° bis 7° für quer zur Laufrichtung auftretende Kippbewegungen aufweisen.

4. Radialwälzlager nach Anspruch 3, **dadurch gekennzeichnet, dass** die Wälzkörper (4) durch die von deren Seitenflächen (8, 9) beabstandete Anordnung der Längsstege (18, 19) der Käfigtaschen (15) beidseitig einen durch die Ober- und Unterkanten der Längsstege (18, 19) begrenzten Freiheitsgrad von etwa 12° bis 18° zum selbsttätigen Ausrichten an den Druckwinkel des Radiallagers (1) bei radialer und axialer Lagerbelastung aufweisen.

5. Radialwälzlager nach Anspruch 1, **dadurch gekennzeichnet, dass** die Zentrumsbereiche (16, 17) der Seitenflächen (8, 9) der Wälzkörper (4) bevorzugt durch in diese Seitenflächen (8, 9) eingearbeitete zentrische Vertiefungen (20, 21) gebildet werden, durch die der Massenschwerpunkt der Wälzkörper (4) radial nach außen zu deren Laufflächen (10) hin verlagerbar ist.

6. Radialwälzlager nach Anspruch 5, **dadurch gekennzeichnet, dass** die Punktkontakte zwischen den Zentrumsbereichen (16, 17) der Seitenflächen (8, 9) und den Längsstegen (18, 19) der Käfigtaschen (15) bevorzugt über zwei längsmittig in die Längsstege (18, 19) eingeformte und in jeweils zentrische Vertiefungen (20, 21) in den Seitenflächen (8, 9) der Wälzkörper (4) hineinragende axiale Kegelspitzen (22, 23) herstellbar sind, die mit dem ebenen Grund (24, 25) der Vertiefungen (20, 21) in Wirkverbindung stehen.

7. Radialwälzlager nach Anspruch 1, **dadurch gekennzeichnet, dass** der Lagerkäfig (5) als spanlos herstellbares Stanzzieh-Prägeteil aus einem Metallwerkstoff, beispielsweise Stahl, Messing oder Aluminium, ausgebildet ist, welcher vollständig oder begrenzt auf dessen Kontaktstellen mit den Wälzkörpern (4) mit Funktionsschichten aus Hartstoff, Chrom-Eisen, Oxid-Keramiken oder Molybdän beschichtet oder mit einem technischen Kunststoff umspritzt ist.

8. Radialwälzlager nach Anspruch 1, **dadurch gekennzeichnet, dass** der Lagerkäfig (5) als Spritzgussteil aus einem technischen Kunststoff, wie PA 66 oder PA 46 mit oder ohne Einlagerungen aus Glasfaser, oder aus einem hochtemperaturbeständigen Kunststoff, beispielsweise aus PAEK, PEEK, TPI oder PAI mit geeigneten Additiven oder Einlagerungen aus Glasfaser, oder aus einem Faserverbundkunststoff aus Gewebeverstärkung und Harzmatrix besteht.

## Claims

1. Radial rolling bearing, in particular a single-row grooved rolling bearing, which consists essentially of an outer bearing ring (2) and of an inner bearing ring (3) and also of a multiplicity of rolling bodies (4), formed as spherical disks, which are arranged between these bearing rings (2, 3) which have in each case two side faces (8, 9) flattened symmetrically from a basic spherical shape and arranged parallel to one another and which roll with their running surfaces (10) in two groove-shaped raceways (11, 12) which are incorporated into the inside (13) of the outer bearing ring (2) and into the outside (14) of the inner bearing ring (3), the rolling bodies (4) being held at uniform distances from one another in the circumferential direction by a bearing cage (5) assembled from two ring halves (6, 7), which bearing cage (5) has for each rolling body (4) individual cage pockets (15) which surround these linearly and in which the rolling bodies (4), via two low-friction point contacts between the center regions (16, 17) of their side faces (8, 9) and the longitudinal webs (18, 19) of the cage pockets (15), on the one hand, are axially guided between the bearing rings (2, 3) and, on the other hand, are designed both with a defined degree of freedom for tilting movements occurring transversely with respect to the running direction and with a defined degree of freedom for automatic orientation with respect to the pressure angle of the radial rolling bearing (1), **characterized in that** the pitch circle (Tk_{cage}) of the bearing cage (5) is smaller than the pitch circle (Tk_{bearing}) of the radial rolling bearing (1), the longitudinal webs (17, 18) of the cage pockets (15) having a maximum height (h) of 35% of the diameter (d_{w}) of the rolling bodies (4), and the rolling body width (b_{w}) limited by the side faces (8, 9) of the rolling bodies (4) amounting to at least 70% of the diameter (d_{w}) of the rolling bodies (4).

2. Radial rolling bearing according to Claim 1, **characterized in that** the transverse webs (26, 27) of the cage pockets (15), said transverse webs being designed to be curved according to the radii of the running surfaces (10) of the rolling bodies (4), extend beyond these running surfaces (10) on both sides in such a way that the longitudinal webs (18, 19) of the cage pockets (15), said longitudinal webs being connected between the transverse webs (26, 27) to these via rounded transitional regions (28, 28', 29, 29'), are arranged at a distance from the side faces (8, 9) of the rolling bodies (4).

3. Radial rolling bearing according to Claim 2, **characterized in that**, by the transverse webs (26, 27) of the cage pockets (15) being designed to extend beyond the running surfaces (10) of the rolling bodies (4), the latter have on both sides a degree of freedom of about 3° to 7°, limited by the transitional regions (28, 28', 29, 29') to the longitudinal webs (18, 19) of the cage pockets (15), for tilting movements which occur transversely with respect to the running direction.

4. Radial rolling bearing according to Claim 3, **characterized in that** by the longitudinal webs (18, 19) of the cage pockets (15) being arranged at a distance from the side faces (8, 9) of the rolling bodies (4), the latter have on both sides a degree of freedom of about 12° to 18°, limited by the upper and lower edges of the longitudinal webs (18, 19), for automatic orientation with respect to the pressure angle of the radial bearing (1) under radial and axial bearing load.

5. Radial rolling bearing according to Claim 1, **characterized in that** the center regions (16, 17) of the side faces (8, 9) of the rolling bodies (4) are preferably formed by centric depressions (20, 21) which are incorporated into these side faces (8, 9) and by means of which the mass center of gravity of the rolling bodies (4) can be displaced radially outward toward their running surfaces (10).

6. Radial rolling bearing according to Claim 5, **characterized in that** the point contacts between the center regions (16, 17) of the side faces (8, 9) and the longitudinal webs (18, 19) of the cage pockets (15) can preferably be produced via two axial cone apices (22, 23) which are incorporated along the longitudinal center into the longitudinal webs (18, 19) and protrude into in each case centric depressions (20, 21) in the side faces (8, 9) of the rolling bodies (4) and which are operatively connected to the planar bottom (24, 25) of the depressions (20, 21).

7. Radial rolling bearing according to Claim 1, **characterized in that** the bearing cage (5) is formed as a stamped/drawn/embossed part, capable of being produced in a non-cutting manner, consisting of a metal material, for example steel, brass or aluminum, which is coated completely or to a limited extent at its contact points with the rolling bodies (4) with functional layers consisting of hard material, chrome iron, oxide ceramics or molybdenum or is injection-molded around with an industrial plastic.

8. Radial rolling bearing according to Claim 1, **characterized in that** the bearing cage (5) consists as an injection molding of an industrial plastic, such as PA 66 or PA 46, with or without inlays of glass fiber, or of a high-temperature plastic, for example of PAEK, PEEK, TPI or PAI, with suitable additives or inlays of glass fiber, or of a composite fiber plastic consisting of a fabric reinforcement and a resin matrix.

## Revendications

1. Palier à roulement radial, notamment palier à roulement rainuré à une rangée, qui se compose essentiellement d'une bague de palier extérieure (2) et d'une bague de palier intérieure (3) ainsi que d'une pluralité de corps de roulement (4) disposés entre ces bagues de palier (2, 3) et réalisés sous forme de rondelles, qui présentent à chaque fois deux faces latérales (8, 9) disposées parallèlement l'une à l'autre et aplaties symétriquement à partir d'une forme de base sphérique, et qui roulent avec leurs surfaces de roulement (10) dans deux pistes de roulement (11, 12) en forme de rainures, qui sont pratiquées dans le côté intérieur (13) de la bague de palier extérieure (2) et dans le côté extérieur (14) de la bague de palier intérieure (3), les corps de roulement (4) étant maintenus dans la direction périphérique à distances régulières les uns des autres par une cage de palier (5) assemblée à partir de deux moitiés annulaires (6, 7), qui présente, pour chaque corps de roulement (4), des cavités de cage (15) entourant ceux-ci de manière linéaire, dans lesquelles les corps de roulement (4) sont guidés axialement d'une part par le biais de deux contacts ponctuels à faible frottement entre les régions centrales (16, 17) de leurs faces latérales (8, 9) et les nervures longitudinales (18, 19) des cavités de cage (15) entre les bagues de palier (2, 3) et d'autre part sont réalisés à la fois avec un degré de liberté défini pour des mouvements de basculement se produisant transversalement à la direction d'avance ainsi qu'avec un degré de liberté défini pour un alignement automatique avec l'angle de pression du palier à roulement radial (1), **caractérisé en ce que** le cercle partiel (Tk_{Käfig}) de la cage de palier (5) est inférieur au cercle partiel (Tk_{Lager}) du palier à roulement radial (1), les nervures longitudinales (18, 19) des cavités de cage (15) présentant une hauteur maximale (h) de 35 % du diamètre (d_{w}) des corps de roulement (4) et la largeur des corps de roulement (b_{w}) limitée par les faces latérales (8, 9) des corps de roulement (4) valant au moins 70 % du diamètre (d_{w}) des corps de roulement (4).

2. Palier à roulement radial selon la revendication 1, **caractérisé en ce que** les nervures transversales (26, 27) des cavités de cage (15) réalisées sous forme courbe en fonction des rayons des surfaces de roulement (10) des corps de roulement (4) s'étendent des deux côtés au-delà de ces surfaces de roulement (10) de telle sorte que les nervures longitudinales (18, 19) des cavités de cage (15) entre les nervures transversales (26, 27) connectées par le biais de régions de transition arrondies (28, 28', 29, 29') à celles-ci soient disposées à distance des faces latérales (8, 9) des corps de roulement (4).

3. Palier à roulement radial selon la revendication 2, **caractérisé en ce que** les corps de roulement (4), par la réalisation des nervures transversales (26, 27) des cavités de cage (15) s'étendant au-delà de leurs surfaces de roulement (10), présentent, de chaque côté, un degré de liberté d'environ 3° à 7° limité par les régions de transition (28, 28', 29, 29') aux nervures longitudinales (18, 19) des cavités de cage (15) pour des mouvements de basculement se produisant transversalement à la direction d'avance.

4. Palier à roulement radial selon la revendication 3, **caractérisé en ce que** les corps de roulement (4), par l'agencement des nervures longitudinales (18, 19) des cavités de cage (15) espacé de leurs faces latérales (8, 9), présentent, de chaque côté, un degré de liberté d'environ 12° à 18° limité par les arêtes supérieure et inférieure des nervures longitudinales (18, 19), pour l'alignement automatique avec l'angle de pression du palier radial (1) lors d'une sollicitation radiale et axiale du palier.

5. Palier à roulement radial selon la revendication 1, **caractérisé en ce que** les régions centrales (16, 17) des faces latérales (8, 9) des corps de roulement (4) sont formées de préférence par des renfoncements (20, 21) centraux pratiqués dans ces faces latérales (8, 9), par lesquels le centre de masse des corps de roulement (4) peut être décalé radialement vers l'extérieur vers leurs surfaces de roulement (10).

6. Palier à roulement radial selon la revendication 5, **caractérisé en ce que** les contacts ponctuels entre les régions centrales (16, 17) des faces latérales (8, 9) et les nervures longitudinales (18, 19) des cavités de cage (15) peuvent être créés de préférence par le biais de deux pointes coniques axiales (22, 23) façonnées sur l'axe longitudinal dans les nervures longitudinales (18, 19) et pénétrant dans des renfoncements centraux respectifs (20, 21) dans les faces latérales (8, 9) des corps de roulement (4), lesquelles pointes coniques sont en liaison fonctionnelle avec la base plane (24, 25) des renfoncements (20, 21).

7. Palier à roulement radial selon la revendication 1, **caractérisé en ce que** la cage de palier (5) est réalisée sous forme de pièce matricée emboutie pouvant être fabriquée sans enlèvement de copeaux en un matériau métallique, par exemple en acier, en laiton ou en aluminium, qui est revêtue complètement ou de manière limitée à ses points de contact avec les corps de roulement (4) avec des couches fonctionnelles en matériau dur, en fer chromé, en céramiques oxydées ou en molybdène, ou qui est surmoulée avec un plastique technique.

8. Palier à roulement radial selon la revendication 1, **caractérisé en ce que** la cage de palier (5) en tant que pièce moulée par injection se compose d'un plastique technique, comme du PA 66 ou du PA 46 avec ou sans incorporation de fibre de verre, ou d'un plastique résistant aux hautes températures, par exemple en PAEK, PEEK, TPI ou PAI avec des additifs appropriés ou des incorporations de fibres de verre, ou d'un plastique composite renforcé par des fibres formé d'un renfort en tissu et d'une matrice de résine.
